# EUROPÄISCHE PATENTSCHRIFT

(11) **EP 4 122 763 B1**
(45) Veröffentlichungstag und Bekanntmachung des Hinweises auf die Patenterteilung: **25.12.2024**
(21) Anmeldenummer: 21187148.8
(22) Anmeldetag: 22.07.2021
(51) Int. Cl.: B60P 7/15

(54) **ZWISCHENWANDVERSCHLUSS ZUM SICHERN VON LADUNG AUF EINER LADEFLÄCHE EINES TRANSPORTFAHRZEUGS SOWIE EINE ENTSPRECHENDE ANORDNUNG**
CLOSURE FOR SECURING LOADS ON A LOADING SURFACE OF A TRANSPORT VEHICLE AND CORRESPONDING ARRANGEMENT
FERMETURE PERMETTANT DE SÉCURISER LA CHARGE SUR UNE ZONE DE CHARGEMENT D'UN VÉHICULE DE TRANSPORT, AINSI QUE DISPOSITIF CORRESPONDANT

(43) Veröffentlichungstag der Anmeldung: 25.01.2023
(73) Patentinhaber: EUROPART Holding GmbH, 58135 Hagen (DE)
(72) Erfinder: Trebus-Kühn, Heiko, 44532 Lünen (DE)
(74) Vertreter: Angerhausen, Christoph

(56) Entgegenhaltungen:
- EP-A1- 3 842 183
- CN-U- 211 765 202
- DE-U1- 202008 012 788
- US-A1- 2006 051 178

## Beschreibung

Die Erfindung geht aus von einem Zwischenwandverschluss zum Sichern von Ladegut auf einer Ladefläche eines Transportfahrzeugs, wobei der Zwischenwandverschluss an mindestens einer von zwei gegenüberliegenden Stirnseiten einen die Stirnseite mit einem einstellbaren Abstand überragenden und in Bezug auf die Stirnseite verspannbaren Klemmhaken aufweist, wobei der Zwischenwandverschluss ferner einen in Längsrichtung des Zwischenwandverschlusses entgegen einer mechanischen Spannkraft verschieblichen Spannkraftindikator mit einer sich proportional zur mechanischen Spannkraft einstellenden optischen Anzeige aufweist. Ein derartiger Zwischenwandverschluss ist aus der CN 211765202 U bekannt. Andere Zwischenwandverschlüsse beschreiben auch die EP 108 609 B1, die DE 20 2006 003 003 U1 und die DE 10 2009 033 320 A1.

Gattungsgemäße Zwischenwandverschlüsse dienen insbesondere dazu, um auf einer Ladefläche eines Transportfahrzeugs, beispielsweise in einem Kastenaufbau des Transportfahrzeugs aufgenommene Güter gegenüber dem Verrücken und dem Umfallen während des Transports zu sichern. Dabei werden Zwischenwandverschlüsse insbesondere dazu verwendet, um zwischen gegenüberliegenden Seitenwänden eines Kastenaufbaus fixiert, den Kastenaufbau in Längsrichtung in mehrere Unterabschnitte zu separieren, sodass Stützflächen für die auf der Ladefläche aufstehenden Güter bereitgestellt sind. Die Ladungssicherung mit Hilfe des Zwischenwandverschlusses erfolgt dabei derart, dass er manuell entsprechend den Abmessungen der verladenen Güter bedarfsweise beispielsweise an den bereits erwähnten Seitenwänden eines Kastenaufbaus fixiert wird, indem die bereits beschriebenen Klemmhaken die Seitenwände übergreifen und den Zwischenwandverschluss an den Seitenwänden verklemmen.

Obschon auch bei den aus dem Stand der Technik bekannten Zwischenwandverschlüssen die Klemmhaken einstellbar sind, um auf unterschiedliche Seitenwanddicken zu reagieren, erfolgt diese Voreinstellung der Klemmhaken und damit die Bereitstellung der Klemmkraft, mit welcher der Zwischenwandverschluss an der Seitenwand verklemmt ist, ausschließlich aufgrund von Erfahrungswerten des Bedieners. Insbesondere geben die aus dem Stand der Technik bekannten Zwischenwandverschlüsse keinerlei Rückkopplung an den Bediener, inwiefern eine von dem Zwischenwandverschluss bereitgestellte Klemmkraft ausreichend sein könnte, um den Zwischenwandverschluss prozesssicher beispielsweise an den Seitenwänden zu verklemmen, sodass bei den im Fahrbetrieb auftretenden Belastungen durch gegen den Zwischenwandverschluss stoßendes Ladegut ein Verrücken des Zwischenwandverschlusses unterbleibt.

Es ist daher die Aufgabe der Erfindung, einen Zwischenwandverschluss der eingangs beschriebenen Art derart weiterzuentwickeln, dass er für die reproduzierbare Bereitstellung einer sicherheitstechnisch relevanten Klemmkraft vorbereitet ist.

Diese Aufgabe wird durch einen Zwischenwandverschluss mit den Merkmalen des Anspruchs 1 gelöst. Der nebengeordnete Anspruch 15 betrifft eine entsprechende Anordnung.

Demgemäß ist bei dem Zwischenwandverschluss vorgesehen, dass dieser einen in einem Hohlprofil des Zwischenwandverschlusses aufgenommenen und in Längsrichtung des Zwischenwandverschlusses entgegen einer mechanischen Spannkraft verschieblichen Spannkraftindikator mit einer sich proportional zur mechanischen Spannkraft einstellenden optischen Anzeige aufweist.

Die Idee der Erfindung liegt somit darin, an der Stirnseite des Zwischenwandverschlusses, mit welcher der Zwischenwandverschluss im Anwendungsfall laderauminnenseitig beispielsweise an einer Seitenwand eines Kastenaufbaus eines Transportfahrzeugs anliegt, einen Spannkraftindikator vorzusehen. Dies ist deshalb möglich, weil über die Stirnseite gerade die von dem die Stirnseite überragenden Klemmhaken bereitgestellte Klemmkraft bzw. entsprechend dem dritten Newtonschen Axiom eine entsprechende Gegenkraft anliegt, welche als Messgröße für die Quantifizierung der Klemmkraft, mit welcher der Zwischenwandverschluss an der Seitenwand befestigt ist, herangezogen werden kann.

Der Spannkraftindikator kann mechanisch, elektrosensorisch oder als eine Kombination aus beidem ausgebildet sein. Bei einer elektrosensorischen Variante kann beispielsweise die Spannkraft an der Stirnseite des Zwischenwandverschlusses mit Hilfe eines piezoelektrischen Sensors erfasst werden. Bei einer vollmechanischen Variante kann ein elastisches Element mit einer definierten Kennlinie vorgesehen sein, etwa eine Feder, welches in Längsrichtung des Hohlprofils verlagert bzw. komprimiert wird und dementsprechend eine seiner Verlagerung bzw. Komprimierung proportionale, der Spannkraft entgegenwirkende Gegenkraft beispielsweise auf die Seitenwand eines Kastenaufbaus ausübt, welche erfindungsgemäß über die sich einstellende optische Anzeige anhand der Stellposition des elastischen Elements angezeigt werden kann.

Der Spannkraftindikator ragt mit einer Lagerfläche über die Stirnseite aus dem Hohlprofil heraus, wobei sich die optische Anzeige proportional zu der senkrecht zu der Lagerfläche wirkenden Spannkraft einstellt. Die Lagerfläche kann Bestandteil eines Kolbens sein, mit dem der Spannkraftindikator über die Stirnseite aus dem Hohlprofil herausragt.

Der Zwischenwandverschluss kann an beiden der gegenüberliegenden Stirnseiten jeweils einen die jeweilige Stirnseite mit einem einstellbaren Abstand überragenden und in Bezug auf die jeweilige Stirnseite verspannbaren Klemmhaken aufweisen. Dabei kann der Zwischenwandverschluss an beiden Stirnseiten jeweils einen in dem Hohlprofil des Zwischenwandverschlusses aufgenommenen und in Längsrichtung des Zwischenwandverschlusses verschieblichen Spannkraftindikator aufweisen, der mit einer jeweiligen Lagerfläche an der jeweiligen Stirnseite aus dem Hohlprofil herausragt.

Der Spannkraftindikator kann einen Kolben aufweisen, der in Längsrichtung des Hohlprofils in dem Hohlprofil geführt ist und der mit einer Lagerfläche über die Stirnseite aus dem Hohlprofil herausragt.

Der Spannkraftindikator kann ein elastisches Element aufweisen, das entgegen der mechanischen Spannkraft vorgespannt ist oder vorgespannt werden kann.

Das elastische Element kann eine Feder, vorzugsweise eine Spiralfeder, mit einer Federkonstante aufweisen, die derart bemessen ist, dass der Spannkraftindikator in einer Verriegelungsposition des Klemmhakens, in welcher eine Klemmbacke des Klemmhakens der Stirnseite maximal angenähert und der Spannkraftindikator unter Vorspannung der Feder relativ zu einer Freigabeposition des Klemmhakens weiter in das Hohlprofil hinein verlagert ist, eine Mindestklemmkraft zwischen sich und der Klemmbacke ausübt.

Der Spannkraftindikator, vorzugsweise ein Kolben des Spankraftindikators, kann in Richtung einer der Stirnseite unter einem Abstand gegenüberliegenden Klemmbacke des Klemmhakens vorgespannt sein oder vorgespannt werden.

Das Hohlprofil kann an einer Längsseite ein Fenster oder einen Durchbruch aufweisen, der profilinnenseitig von dem Spannkraftindikator mit einem von dem Fenster oder dem Durchbruch freigelegten, vorzugsweise grafischen Indikatorelement überdeckt wird.

Das Indikatorelement kann mindestens eine Linie aufweisen, die sich zumindest abschnittsweise parallel zu der Stirnseite erstreckt und abhängig von einer Stellposition des Spannkraftindikators in der Längsrichtung eine relative Anordnung in Bezug auf das Fenster oder den Durchbruch, oder deren jeweiliger Berandung, einnimmt. Das Indikatorelement kann eine Mehrzahl paralleler Linien aufweisen, die in Verstellrichtung des Spannkraftindikators zueinander beabstandet sind. Auf diese Weise können sie eine Skala bilden. Das Indikatorelement kann auch jeder andere Gestaltung aufweisen, welche dazu geeignet ist, eine geeignete Spannkraft zur Festlegung des Zwischenwandverschlusses in Abhängigkeit einer Stellposition des Indikatorelements in Bezug auf das Fenster oder den Durchbruch des Indikatorelements zumindest qualitativ anzuzeigen. Beispielsweise kann auch eine Farbskala auf dem Indikatorelement bereitgestellt sein.

Der Zwischenwandverschluss kann einen zwischen den beiden gegenüberliegenden Stirnseiten angeordneten Zwischenabschnitt aufweisen, der in der Längsrichtung des Zwischenwandverschlusses teleskopierbar ist.

Der Klemmhaken kann eine der Stirnseite unter einem Abstand gegenüberliegende Klemmbacke aufweisen, wobei der Abstand der Klemmbacke zu der Stirnseite über einen Schwenkhebel einstellbar ist, wozu der Schwenkhebel über einen Kniehebel an dem Klemmhaken angelenkt ist.

Der Kniehebel kann eine einstellbare Länge aufweisen und dazu vorzugsweise über eine Gewindestange mit dem Schwenkhebel gekoppelt sein. Die Einstellung der Länge des Kniehebels kann mit Hilfe einer auf die Gewindestange aufgedreht Mutter erfolgen. Wenn der Kniehebel über eine Gewindestange mit dem Schwenkhebel gekoppelt ist, kann die Gewindestange über ein Federelement, vorzugsweise über eine Spiralfeder, an dem Schwenkhebel abgestützt sein.

Alternativ zu dem Kniehebel mit der einstellbaren Länge kann auch vorgesehen sein, dass der Kniehebel eine feste Länge aufweist und den Schwenkhebel mit dem Klemmhaken starr verbindet. Diese Ausführungsform ist erfindungsgemäß bevorzugt, da sie gegenüber dem Kniehebel mit einstellbarer Länge konstruktiv einfacher ist. Aufgrund des entgegen einer mechanischen Spannkraft verschieblichen Spannkraftindikators ist es bei dem erfindungsgemäßen Zwischenwandverschluss nicht erforderlich, dass über eine Variation des Kniehebels die Anpassung des Klemmhakens an die vorgefundene Wanddicke erforderlich ist. Die Kompensation der Wanddicke kann anders bei den aus dem Stand der Technik bekannten Zwischenwandverschlüssen von dem entgegen der mechanischen Spannkraft verschieblichen Spannkraftindikator übernommen werden.

Gemäß einem anderen Aspekt wird eine Anordnung zum Sichern von Ladung auf einer Ladefläche eines Transportfahrzeugs beschrieben, die mindestens einen Zwischenwandverschluss der zuvor beschriebenen Art aufweist. Die Anordnung weist weiterhin eine Ladefläche eines Transportfahrzeugs, beispielsweise eines Lastkraftwagens, mit einem Kastenaufbau auf. Die Ladefläche des Transportfahrzeugs kann zwei gegenüberliegende Seitenwände aufweisen, die über den Zwischenwandverschluss miteinander verbunden sind. Der Zwischenwandverschluss kann dabei mit seinem mindestens einen Klemmhaken eine der Seitenwände übergreifen und die Seitenwand zwischen sich und der Stirnseite mit der mechanischen Spannkraft einklemmen.

Es müssen nicht zwingend beide der gegenüberliegenden Enden des Zwischenwandverschlusses erfindungsgemäß ausgebildet sein. Es ist auch denkbar, dass an einem der gegenüberliegenden Enden der Zwischenwandverschluss analog zu der technischen Lösung der DE 10 2009 033 320 A1 ausgebildet ist.

Weitere Einzelheiten der Erfindung werden anhand der nachstehenden Figuren erläutert. Dabei zeigt:
- Figur 1: in perspektivischer Darstellung einen Zwischenwandverschluss gemäß dem Stand der Technik;
- Figur 2: eine Verladeanordnung unter Verwendung eines Zwischenwandverschlusses gemäß dem Stand der Technik;
- Figur 3: eine Detailansicht einer erfindungsgemäßen Ausführungsform eines Zwischenwandverschlusses;
- Figur 4: eine weitere Detailansicht eines erfindungsgemäßen Zwischenwandverschlusses mit einer Gegenüberstellung der Offenposition und der Verriegelungsposition des Klemmhakens;
- Figur 5: eine weitere Ausführungsform eines erfindungsgemäßen Zwischenwandverschlusses in teiltransparenter Darstellung und in der Offenstellung des Klemmhakens; und
- Figur 6: den Zwischenwandverschluss gemäß Figur 5 in der Schließstellung des Klemmhakens.

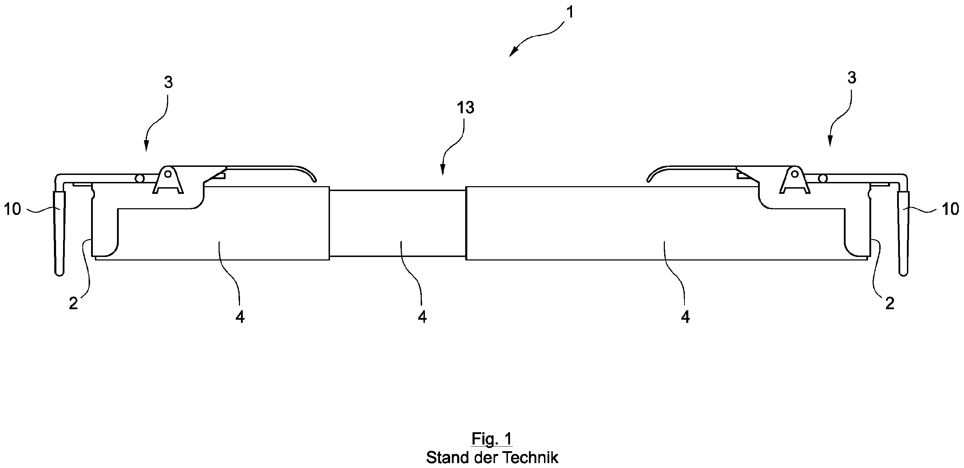

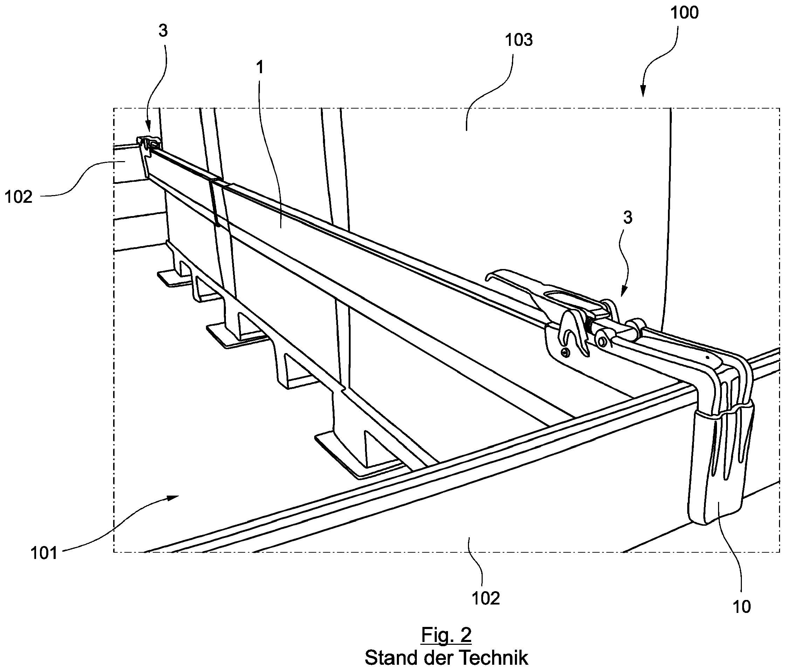

Die Figur 1 zeigt einen Zwischenwandverschluss 1, wie er aus dem Stand der Technik bekannt ist. Der Zwischenwandverschluss 1 weist ein teleskopierbares Hohlprofil 4 auf, das an seinen gegenüberliegenden Stirnseiten 2 jeweils einen Klemmhaken 3 aufweist, der die jeweilige Stirnseite 2 mit einer Klemmbacke übergreift. Zwischen der jeweiligen Klemmbacke 10 und der jeweiligen Stirnseite 2 ist ein Freiraum geschaffen, über den der Zwischenwandverschluss 1 über eine obere, horizontale Längskante auf eine Seitenwand 102 einer Ladefläche 101 eines Transportfahrzeugs 100 aufgesetzt werden kann, wie dies in Figur 2 gezeigt ist. Der Zwischenwandverschluss 1 kann demgemäß unter einem gewissen Abstand vom Boden der Ladefläche 101 in im Wesentlichen horizontaler Ausrichtung quer zur Längsrichtung der Ladefläche zwischen den Seitenwänden 102 fixiert werden, um die Ladung 103 vor Herumrutschen und Umkippen zu sichern.

Die Darstellung gemäß Figur 2 veranschaulicht, dass es für eine sichere Fixierung des Zwischenwandverschlusses 1 zwischen den Seitenwänden 102 erforderlich ist, dass die Klemmbacken 3 eine ausreichende Klemmkraft bereitstellen, um das versehentliche Verrücken des Zwischenwandverschlusses beispielsweise bei einer Vollbremsung des Transportfahrzeugs wirksam zu vermeiden. Um eine Breitenanpassung des Zwischenwandverschlusses 1 zu erreichen, weist der Zwischenwandverschluss 1 in einen teleskopierbaren Zwischenabschnitt 13 zwischen den gegenüberliegenden Stirnseiten auf. Dazu können sämtliche Profile des Zwischenwandverschlusses 1 als formschlüssig aufeinander geschobene Hohlprofile 4 ausgebildet sein.

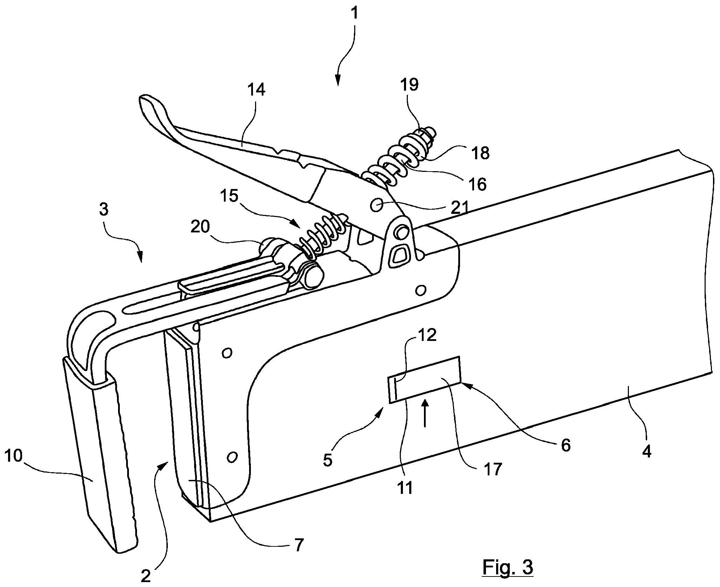

Die Figur 3 zeigt eine beispielhafte Ausführungsform eines erfindungsgemäßen Zwischenwandverschlusses 1. Dieser weist neben dem Klemmhaken 3 weiterhin einen in dem Hohlprofil 4 des Zwischenwandverschlusses 1 aufgenommenen und in der Längsrichtung des Zwischenwandverschlusses 1 entgegen einer mechanischen Spannkraft verschieblichen Spannkraftindikator 5 auf. Der Spannkraftindikator 5 ragt mit einer Lagerfläche 7 über die Stirnseite 2 aus dem Hohlprofil 4 heraus. Für die Rückkopplung der eingestellten Spannkraft an den Benutzer weist der Zwischenwandverschluss 1 eine optische Anzeige 6 auf, welche sich proportional zu der mechanischen Spannkraft einstellt. Wenn somit in den zwischen der Klemmbacke 10 und der Lagerfläche 7 des Spannkraftindikators 5 bereitgestellten Freiraum an der Stirnseite 2 des Zwischenwandverschlusses 1 eine Seitenwand eingesetzt bzw. der Zwischenwandverschluss 1 in der zuvor mit Bezug auf die Figuren 1 und 2 beschriebenen Weise auf die Seitenwand aufgesetzt wird, kann durch Betätigen des Schwenkhebels 14 die Klemmbacke 10 weiter in Richtung der Lagerfläche 7 an der Stirnseite 2 angenähert werden. Wenn die Lagerfläche 7 an der dem Laderaum zugewandten Innenseite der Seitenwand zur Anlage kommt, führt weiteres Verschwenken des Schwenkhebels 14 dazu, dass der Spannkraftindikator 5 entgegen seiner mechanischen Spannkraft in das Hohlprofil 4 des Zwischenwandverschlusses 1 hineingeschoben wird.

Bei Kenntnis einer Kennlinie des Spannkraftindikators 5 kann aus der Wegstrecke, um welche die Lagerfläche 7 weiter in Richtung des Hohlprofils 7 verlagert wird, auf die von der Lagerfläche 7 auf die Seitenwand einwirkende Abstützkraft und damit auf eine entsprechende Klemmkraft geschlossen werden, mit welcher der Zwischenwandverschluss 1 an der Seitenwand verklemmt ist. Die mechanische Spannkraft kann dazu beispielsweise von einem Federelement, beispielsweise von einer Spiralfeder oder dergleichen bereitgestellt werden, welche einen besonders einfachen Rückschluss aus der Wegstrecke, um welche die Lagerfläche 7 verlagert worden ist, auf die auf die Lagerfläche 7 wirkende Kraft zulässt.

Die optische Anzeige 6 weist ein Fenster auf, welches als ein Durchbruch in dem Hohlprofil 4 ausgebildet sein kann. Durch das Fenster 11 hindurch ist ein Indikatorelement 12 erkennbar, welches unmittelbar auf den Spannkraftindikator 5 aufgedruckt sein kann. Dazu kann der Spannkraftindikator 5 einen im Wesentlichen formschlüssig in dem Hohlprofil 4 aufgenommenen Profilabschnitt bzw. einen Kolben aufweisen, an dessen der Stirnseite 2 zugewandtem Ende die Lagerfläche 7 ausgebildet ist, mit welcher er aus dem Hohlprofil 4 herausragt. Wie in der Figur 3 dargestellt ist, kann das Indikatorelement 12 ein Index sein, welcher in Bezug auf eine Referenzmarkierung an der Außenseite des Hohlprofils 4 verstellbar ist.

Der Klemmhaken 3 kann grundsätzlich wie aus dem Stand der Technik bekannt ausgebildet sein und weist dazu einen Schwenkhebel 14 auf, der über einen Kniehebel 15 an die in Längsrichtung des Hohlprofils 4 und damit senkrecht zu der Stirnseite 2 verstellbare Klemmbacke 10 angelenkt ist. Der Kniehebel 15 ist über eine erste Gelenkachse 20 an der linear verstellbaren Klemmbacke 10 und über eine zweite Gelenkachse 21 an den Schwenkhebel 14 angelenkt. Der Kniehebel 15 weist eine einstellbare Länge auf und ist dazu über eine Gewindestange 16 mit dem Schwenkhebel 14 gekoppelt. Die Gewindestange 16 wiederum ist über ein Federelement 18, welches vorliegend als eine Spiralfeder ausgebildet ist, an dem Schwenkhebel 14 abgestützt. Über eine auf die Gewindestange 16 aufgeschraubte Mutter 19 kann die Vorspannung des Federelements 18 und damit die Nulllage des Schwenkhebels 14 in der Offenposition gemäß Figur 3 eingestellt werden.

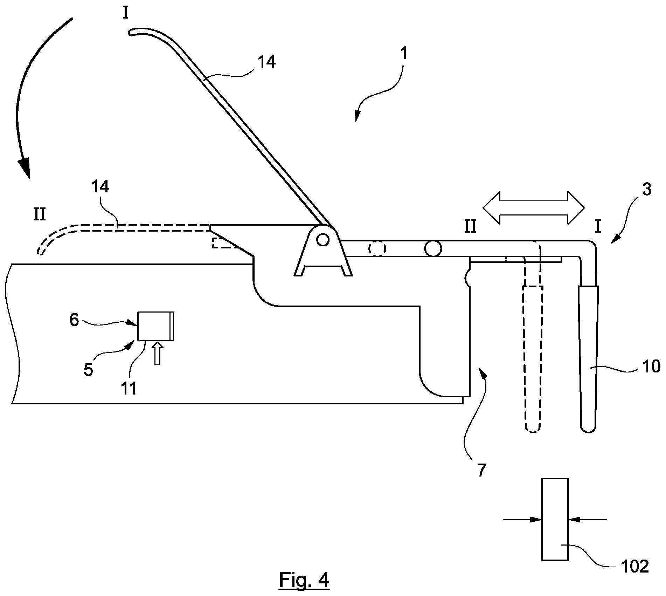

Die Figuren 4 bis 6 veranschaulichen am Beispiel einer Ausführungsform der Erfindung den Verriegelungsvorgang mit Hilfe eines erfindungsgemäßen Zwischenwandverschlusses 1. Die Figur 4 zeigt die lineare Verstellung der Klemmbacke 10 infolge der Betätigung des Schwenkhebels 14, wobei mit der Ziffer I die Offenstellung der Klemmbacke 10 bzw. des Klemmhebels 14 und mit II die Schließstellung/Verriegelungsposition der Klemmbacke 10 bzw. des Schwenkhebels 14 dargestellt ist. Der Spannkraftindikator 5, der vorliegend wieder in der Ausführung gemäß dem Beispiel nach Figur 3 ausgebildet ist, ist in der Offenposition I des Schwenkhebels 14 bzw. der Klemmbacke 10 gezeigt. Die symbolisch eingezeichnete Trennwand 102 veranschaulicht die in der Verriegelungsposition auf die Wand 102 wirkenden und sich gegenseitig aufhebenden Klemm- und Stützkräfte, die von der Klemmbacke 10 von der Außenseite auf die Wand 102 und von der Lagerfläche 7 an der Innenseite der Wand 102 wirken und damit die Verklemmung der Wand 102 zwischen der Klemmbacke 10 und der Lagerfläche 7 bewirken.

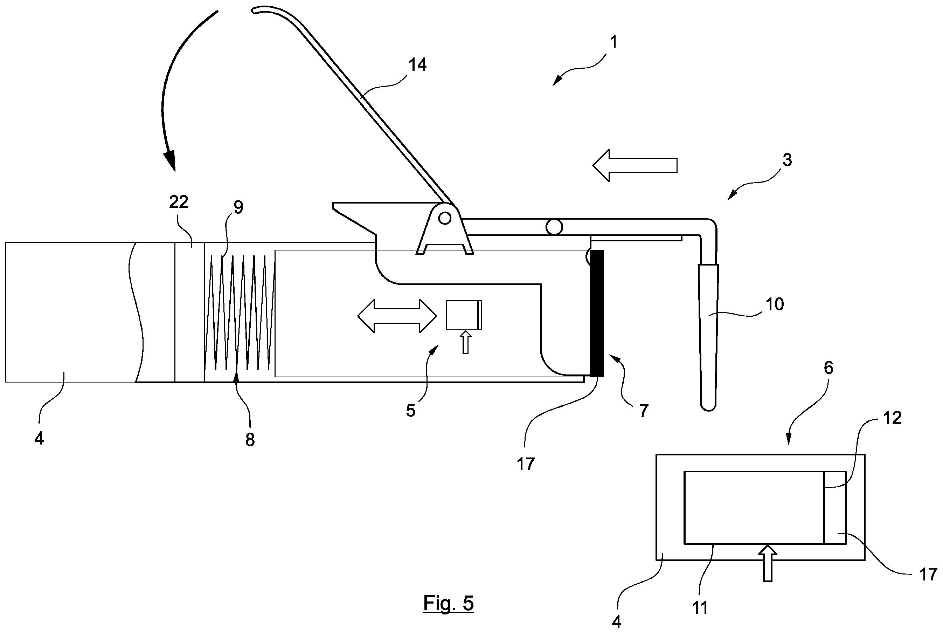

Wie in Figur 5 gezeigt ist, ist das Indikatorelement 12 in der Offenstellung des Klemmhakens mit von dem Hohlprofil 4 abgeschwenktem Schwenkhebel 14 und dementsprechend auch bei eingesetztem Wandelement (nicht dargestellt) unbelastetem Spannkraftindikator 5 aus seiner durch das Pfeilsymbol gekennzeichneten Sollposition für eine ordnungsgemäße Verriegelung herausbewegt.

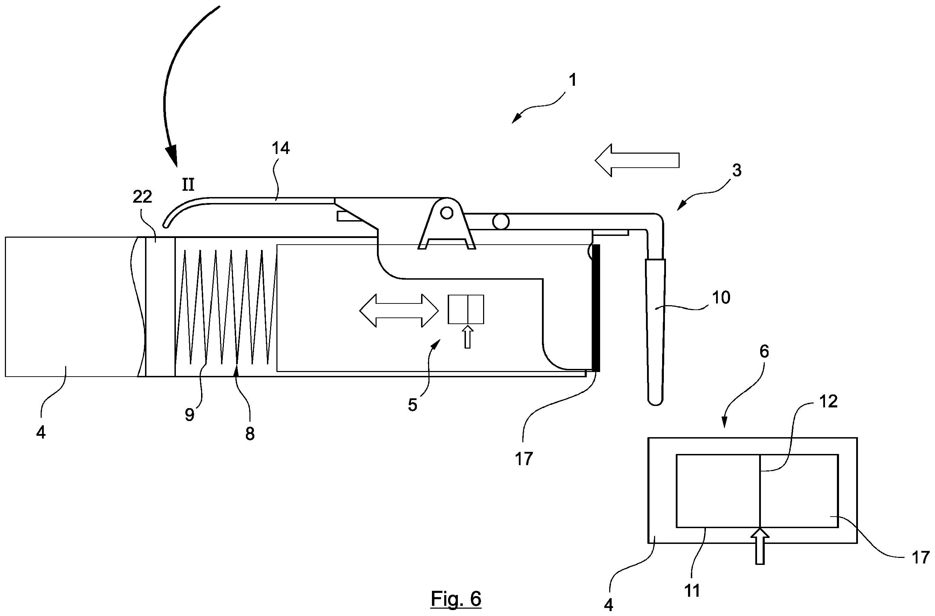

Wenn in den Zwischenraum zwischen der Lagerfläche 7 und der Klemmbacke 10 ein Wandelement eingelegt ist und der Schwenkhebel 14 in die in Figur 6 gezeigte eingeklappte Position verschwenkt wird, bewegt sich die Klemmbacke 10 weiter in Richtung der Lagerfläche 7, bis erstmalig sowohl die Klemmbacke 10 als auch die Lagerfläche 7 an gegenüberliegenden Seiten der Seitenwand zur Anlage kommen. Weiteres Verschwenken des Klemmhebels 14 in Richtung Schließstellung führt dazu, dass entsprechend des Weiteren sich Annäherns der Klemmbacke 10 an die Stirnseite 2 des Zwischenwandverschlusses 1 die Lagerfläche 7, mit welcher der Spannkraftindikator 5 über die Stirnseite 2 aus dem Hohlprofil 4 herausragt, weiter in Richtung des Hohlprofils 4 verlagert wird. Diese Verlagerung erfolgt entgegen einer mechanischen Spannkraft, welche von dem elastischen Element 8 in dem Hohlprofil 4 auf den Spannkraftindikator 5 ausgeübt wird. Dazu weist der Spannkraftindikator 5 einen Kolben 17 auf, der mit einem ersten seiner gegenüberliegenden Enden über die Stirnseite 2 aus dem Hohlprofil 4 herausragt und an seiner Stirnseite wiederum die Lagerfläche 7 aufweist, während der Kolben 17 über sein der Lagerfläche 7 abgewandtes, rückwärtiges Ende über das elastische Element 8 an einer Abstützung 22 in dem Hohlprofil 4 abgestützt ist.

Die Figur 6 veranschaulicht weiterhin, dass in dem in Figur 6 dargestellten Verriegelungszustand mit angeschwenktem Schwenkhebel 14 das elastische Element 8 im Vergleich zu der Darstellung gemäß Figur 5 weiter komprimiert wurde infolge der bereits beschriebenen Verlagerung des Kolbens 17 weiter in das Innere des Hohlprofils 4 hinein. Infolge dieser Verlagerung wiederum wurden das Indikatorelement 12 und das Pfeilsymbol an der Außenseite des Hohlprofils 4 der optischen Anzeige 6 in die Flucht gebracht, um das Erreichen einer hinreichenden Klemmkraft anzuzeigen.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

### Bezugszeichenliste:

- 1: Zwischenwandverschluss
- 2: Stirnseite
- 3: Klemmhaken
- 4: Hohlprofil
- 5: Spannkraftindikator
- 6: optische Anzeige
- 7: Lagerfläche
- 8: elastisches Element
- 9: Feder
- 10: Klemmbacke
- 11: Fenster
- 12: Indikatorelement
- 13: Zwischenabschnitt
- 14: Schwenkhebel
- 15: Kniehebel
- 16: Gewindestange
- 18: Federelement
- 19: Mutter
- 20: erste Gelenkachse
- 21: zweite Gelenkachse
- 22: Abstützung
- 100: Transportfahrzeug
- 101: Ladefläche
- 102: Seitenwand
- 103: Ladung

## Patentansprüche

1. Zwischenwandverschluss (1) zum Sichern von Ladung (103) auf einer Ladefläche (101) eines Transportfahrzeugs (100), wobei der Zwischenwandverschluss (1) an mindestens einer von zwei gegenüberliegenden Stirnseiten (2) einen die Stirnseite (2) mit einem einstellbaren Abstand überragenden und in Bezug auf die Stirnseite (2) verspannbaren Klemmhaken (3) aufweist, wobei der Zwischenwandverschluss (1) einen in einem Hohlprofil (4) des Zwischenwandverschlusses (1) aufgenommenen und in Längsrichtung des Zwischenwandverschlusses (1) entgegen einer mechanischen Spannkraft verschieblichen Spannkraftindikator (5) aufweist, der eine sich proportional zur mechanischen Spannkraft einstellende optische Anzeige (6) aufweist, **dadurch gekennzeichnet, dass** der Spannkraftindikator (5) mit einer Lagerfläche (7) über die Stirnseite (2) aus dem Hohlprofil (4) herausragt, wobei sich die optische Anzeige (6) proportional zu der senkrecht zu der Lagerfläche (7) wirkenden Spannkraft einstellt.

2. Zwischenwandverschluss (1) nach Anspruch 1, der an beiden der gegenüberliegenden Stirnseiten (2) jeweils einen die jeweilige Stirnseite (2) mit einem einstellbaren Abstand überragenden und in Bezug auf die jeweilige Stirnseite (2) verspannbaren Klemmhaken (3) aufweist, wobei der Zwischenwandverschluss (1) an beiden Stirnseiten (2) jeweils einen in dem Hohlprofil (4) des Zwischenwandverschlusses (1) aufgenommenen und in Längsrichtung des Zwischenwandverschlusses (1) verschieblichen Spannkraftindikator (5) aufweist, der mit einer jeweilige Lagerfläche (7) an der jeweiligen Stirnseite (2) aus dem Hohlprofil (4) herausragt.

3. Zwischenwandverschluss (1) nach einem der vorangegangenen Ansprüche, bei dem der Spannkraftindikator (5) einen Kolben (17) aufweist, der in Längsrichtung des Hohlprofils (4) in dem Hohlprofil (4) geführt ist und der mit einer Lagerfläche (7) über die Stirnseite (2) aus dem Hohlprofil (4) herausragt.

4. Zwischenwandverschluss (1) nach einem der vorangegangenen Ansprüche, bei dem der Spannkraftindikator (5) ein elastisches Element (8) aufweist, das entgegen der mechanischen Spannkraft vorgespannt ist oder vorgespannt werden kann.

5. Zwischenwandverschluss (1) nach Anspruch 4, bei dem das elastische Element (8) eine Feder (9), vorzugsweise eine Spiralfeder, mit einer Federkonstante aufweist, die derart bemessen ist, dass der Spannkraftindikator (5) in einer Verriegelungsposition des Klemmhakens (3), in welcher eine Klemmbacke (10) des Klemmhaken (3) der Stirnseite (2) maximal angenähert und der Spannkraftindikator (5) zur Aufrechterhaltung eines einer Wandstärke entsprechenden Abstandes zwischen der Lagerfläche (7) und der Klemmbacke (10) unter Vorspannung der Feder (9) relativ zu einer Freigabeposition des Klemmhakens (3) weiter in das Hohlprofil (4) hinein verlagert ist, eine bestimmte Mindestklemmkraft zwischen sich und der Klemmbacke (10) ausübt.

6. Zwischenwandverschluss (1) nach einem der vorangegangenen Ansprüche, bei dem der Spannkraftindikator (5), vorzugsweise ein Kolben (17) des Spankraftindikators, in Richtung einer der Stirnseite (2) unter einem Abstand gegenüberliegenden Klemmbacke (10) des Klemmhakens (3) vorgespannt ist oder vorgespannt werden kann.

7. Zwischenwandverschluss (1) nach einem der vorangegangenen Ansprüche, bei dem das Hohlprofil (4) an einer Längsseite ein Fenster (11) oder einen Durchbruch aufweist, der profilinnenseitig von dem Spannkraftindikator (5) mit einem von dem Fenster (11) oder dem Durchbruch freigelegten, vorzugsweise grafischen Indikatorelement (12) überdeckt wird.

8. Zwischenwandverschluss (1) nach Anspruch 7, bei dem das Indikatorelement (12) mindestens eine Linie aufweist, die sich zumindest abschnittsweise parallel zu der Stirnseite (2) erstreckt und abhängig von einer Stellposition des Spannkraftindikators (5) in der Längsrichtung eine relative Anordnung in Bezug auf das Fenster (11) oder den Durchbruch einnimmt.

9. Zwischenwandverschluss (1) nach einem der vorangegangenen Ansprüche, der einen zwischen den beiden gegenüberliegenden Stirnseiten (2) angeordneten Zwischenabschnitt (13) aufweist, der in der Längsrichtung des Zwischenwandverschlusses (1) teleskopierbar ist.

10. Zwischenwandverschluss (1) nach einem der vorangegangenen Ansprüche, bei dem der Klemmhaken (3) eine der Stirnseite (2) unter einem Abstand gegenüberliegende Klemmbacke (10) aufweist, wobei der Abstand der Klemmbacke (10) zu der Stirnseite (2) über einen Schwenkhebel (14) einstellbar ist, wozu der Schwenkhebel (14) über einen Kniehebel (15) an dem Klemmhaken (3) angelenkt ist.

11. Zwischenwandverschluss (1) nach Anspruch 10, bei dem der Kniehebel (15) eine einstellbare Länge aufweist und dazu vorzugsweise über eine Gewindestange (16) mit dem Schwenkhebel (14) gekoppelt ist.

12. Zwischenwandverschluss (1) nach Anspruch 10 oder 11, bei dem der Kniehebel (15) über eine Gewindestange (16) mit dem Schwenkhebel (14) gekoppelt ist, wobei die Gewindestange (16) über ein Federelement (18), vorzugsweise über eine Spiralfeder, an dem Schwenkhebel (14) abgestützt ist.

13. Zwischenwandverschluss (1) nach einem der Ansprüche 1 bis 11, bei dem Kniehebel (15) eine feste Länge aufweist und den Schwenkhebel (14) mit dem Klemmhaken (3) starr verbindet.

14. Anordnung zum Sichern von Ladung (103) auf einer Ladefläche (101) eines Transportfahrzeugs (100), wobei die Anordnung mindestens einen Zwischenwandverschluss (1) nach einem der vorangegangen Ansprüche sowie eine Ladefläche (101) eines Transportfahrzeugs (100) aufweist, die zwei gegenüberliegende Seitenwände (102) aufweist, die über den Zwischenwandverschluss (1) miteinander verbunden sind, wobei der Zwischenwandverschluss (1) mit seinem mindestens einen Klemmhaken (3) eine der Seitenwände (102) übergreift und die Seitenwand (102) zwischen sich und der Stirnseite (2) mit der mechanischen Spannkraft einklemmt.

## Claims

1. Partition wall closure (1) for securing load (103) on a loading surface (101) of a transport vehicle (100), wherein the partition wall closure (1) has, on at least one of two opposite end sides (2), a clamping hook (3) which projects beyond the end side (2) with an adjustable spacing and can be clamped in relation to the end side (2), wherein the intermediate wall closure (1) has a clamping force indicator (5) which is received in a hollow profile (4) of the partition wall closure (1) and can be displaced in the longitudinal direction of the partition wall closure (1) counter to a mechanical clamping force and has a visual indicator (6) which is adjusted proportionally to the mechanical clamping force, **characterized in that** the clamping force indicator (5) projects with a bearing surface (7) beyond the end side (2) out of the hollow profile (4), wherein the visual indicator (6) is adjusted proportionally to the clamping force acting perpendicularly to the bearing surface (7).

2. Partition wall closure (1) according to claim 1, which has, on both of the opposite end sides (2), in each case a clamping hook (3) which projects beyond the respective end side (2) with an adjustable spacing and can be clamped in relation to the respective end side (2), wherein the partition wall closure (1) has, on both end sides (2), in each case one clamping force indicator (5) which is received in the hollow profile (4) of the partition wall closure (1) and can be displaced in the longitudinal direction of the partition wall closure (1) and projects with a respective bearing surface (7) on the respective end side (2) out of the hollow profile (4).

3. Partition wall closure (1) according to one of the preceding claims, in which the clamping force indicator (5) has a piston (17) which is guided in the longitudinal direction of the hollow profile (4) in the hollow profile (4) and which projects with a bearing surface (7) beyond the end side (2) out of the hollow profile (4).

4. Partition wall closure (1) according to one of the preceding claims, in which the clamping force indicator (5) has an elastic element (8) which is pretensioned or can be pretensioned counter to the mechanical clamping force.

5. Partition wall closure (1) according to claim 4, in which the elastic element (8) has a spring (9), preferably a spiral spring, with a spring constant which is dimensioned such that the clamping force indicator (5) exerts a certain minimum clamping force between itself and the clamping jaw (10) in a locking position of the clamping hook (3), in which a clamping jaw (10) of the clamping hook (3) maximally approaches the end side (2) and the clamping force indicator (5) is displaced further into the hollow profile (4) relative to a release position of the clamping hook (3) in order to maintain a spacing, corresponding to a wall thickness, between the bearing surface (7) and the clamping jaw (10) with pretensioning of the spring (9).

6. Partition wall closure (1) according to one of the preceding claims, in which the clamping force indicator (5), preferably a piston (17) of the clamping force indicator, is pretensioned or can be pretensioned in the direction of a clamping jaw (10) of the clamping hook (3) which lies opposite the end side (2) at a spacing.

7. Partition wall closure (1) according to one of the preceding claims, in which the hollow profile (4) has a window (11) or an aperture on a longitudinal side, which window or aperture is covered on the profile inner side by the clamping force indicator (5) with a preferably graphic indicator element (12) which is exposed by the window (11) or the aperture.

8. Partition wall closure (1) according to claim 7, in which the indicator element (12) has at least one line which extends parallel to the end side (2) at least in sections and assumes a relative arrangement with respect to the window (11) or the aperture in the longitudinal direction depending on an actuating position of the clamping force indicator (5).

9. Partition wall closure (1) according to one of the preceding claims, which has an intermediate section (13) which is arranged between the two opposite end sides (2) and can be telescoped in the longitudinal direction of the partition wall closure (1).

10. Partition wall closure (1) according to one of the preceding claims, in which the clamping hook (3) has a clamping jaw (10) which lies opposite the end side (2) at a spacing, wherein the spacing of the clamping jaw (10) from the end side (2) can be adjusted via a pivot lever (14), for which purpose the pivot lever (14) is articulated on the clamping hook (3) via a toggle lever (15).

11. Partition wall closure (1) according to claim 10, in which the toggle lever (15) has an adjustable length and for this purpose is preferably coupled to the pivot lever (14) via a threaded rod (16).

12. Partition wall closure (1) according to claim 10 or 11, in which the toggle lever (15) is coupled to the pivot lever (14) via a threaded rod (16), wherein the threaded rod (16) is supported on the pivot lever (14) via a spring element (18), preferably via a spiral spring.

13. Partition wall closure (1) according to one of claims 1 to 11, in which the toggle lever (15) has a fixed length and rigidly connects the pivot lever (14) to the clamping hook (3).

14. Arrangement for securing load (103) on a loading surface (101) of a transport vehicle (100), wherein the arrangement has at least one partition wall closure (1) according to one of the preceding claims and a loading surface (101) of a transport vehicle (100) which has two opposite side walls (102) which are connected to one another via the partition wall closure (1), wherein the partition wall closure (1) engages with its at least one clamping hook (3) over one of the side walls (102) and clamps the side wall (102) between itself and the end side (2) with the mechanical clamping force.

## Revendications

1. Fermeture de cloison (1) pour la sécurisation d'une charge (103) sur une surface de changement (101) d'un véhicule de transport (100), dans laquelle la fermeture de cloison (1) comprend, au niveau d'au moins une parmi deux faces frontales (2) opposées, un crochet de serrage (3) dépassant de la face frontale (2) d'une distance réglable et pouvant être serré par rapport à la face frontale (2), dans laquelle la fermeture de cloison (1) comprend un indicateur de force de serrage (5) logé dans un profilé creux (4) de la fermeture de cloison (1) et qui coulisse contre une force de serrage mécanique dans la direction longitudinale de la fermeture de cloison (1), qui comprend un affichage optique (6) se réglant proportionnellement à la force de serrage mécanique (5), **caractérisée en ce que** l'indicateur de force de serrage (5) dépasse, avec une surface de stockage (7), de la face frontale (2) hors du profilé creux (4), dans laquelle l'affichage optique (6) se règle proportionnellement à la force de serrage qui s'exerce perpendiculairement à la surface de stockage (7).

2. Fermeture de cloison (1) selon la revendication 1, qui comprend, au niveau de chacune des deux faces frontales (2) opposées, un crochet de serrage (3) dépassant de la face frontale (2) respective d'une distance réglable et pouvant être serré par rapport à la face frontale (2) respective, dans laquelle la fermeture de cloison (1) comprend, au niveau de chacune des deux faces frontales (2), un indicateur de force de serrage (5) logé dans le profilé creux (4) de la fermeture de cloison (1) et qui coulisse dans la direction longitudinale de la fermeture de cloison (1), qui dépasse, avec une surface de stockage (7) respective, au niveau de la face frontale (2) respective, hors du profilé creux (4).

3. Fermeture de cloison (1) selon l'une des revendications précédentes, dans laquelle l'indicateur de force de serrage (5) comprend un piston (17) qui est guidé dans la direction longitudinale du profilé creux (4) dans le profilé creux (4) et qui dépasse, avec une surface de stockage (7), de la face frontale (2) hors du profilé creux (4).

4. Fermeture de cloison (1) selon l'une des revendications précédentes, dans laquelle l'indicateur de force de serrage (5) comprend un élément élastique (8) qui est précontraint ou peut être précontraint contre la force de serrage mécanique.

5. Fermeture de cloison (1) selon la revendication 4, dans laquelle l'élément élastique (8) comprend un ressort (9), de préférence un ressort à spirale, avec une constante élastique telle que l'indicateur de force de serrage (5), dans une position de verrouillage du crochet de serrage (3), dans laquelle une mâchoire de serrage (10) du crochet de serrage (3) s'approche au maximum de la face frontale (2) et l'indicateur de force de serrage (5), pour maintenir une distance correspondante à une épaisseur de paroi entre la surface de stockage (7) et la mâchoire de serrage (10), est déplacé, sous l'action de la précontrainte du ressort (9), vers une position de libération du crochet de serrage (3), plus loin à l'intérieur du profilé creux (4), exerce une force de serrage minimale déterminée entre lui et la mâchoire de serrage (10).

6. Fermeture de cloison (1) selon l'une des revendications précédentes, dans laquelle l'indicateur de force de serrage (5), de préférence un piston (17) de l'indicateur de force de serrage, est précontraint ou peut être précontraint en direction d'une mâchoire de serrage (10) du crochet de serrage (3), en face et à une certaine distance de la face frontale.

7. Fermeture de cloison (1) selon l'une des revendications précédentes, dans laquelle le profilé creux (4) comprend, au niveau d'un côté longitudinal, une fenêtre (11) ou un perçage, qui est recouvert, du côté interne du profilé, par l'indicateur de force de serrage (5), avec un élément d'indicateur (12) libéré par la fenêtre (11) ou le perçage, de préférence graphique.

8. Fermeture de cloison (1) selon la revendication 7, dans laquelle l'élément d'indicateur (12) comprend au moins une ligne qui s'étend, au moins à certains endroits, parallèlement à la face frontale (2) et qui adopte, en fonction d'une position de réglage de l'indicateur de force de serrage (5) dans la direction longitudinale, une disposition relative par rapport à la fenêtre (11) ou au perçage.

9. Fermeture de cloison (1) selon l'une des revendications précédentes, qui comprend une portion intermédiaire (13) disposée entre les deux faces frontales (2) opposées, qui est mobile de manière télescopique dans la direction longitudinale de la fermeture de cloison (1).

10. Fermeture de cloison (1) selon l'une des revendications précédentes, dans laquelle le crochet de serrage (3) comprend une mâchoire de serrage (10) qui fait face à une certaine distance de la face frontale (2), dans laquelle la distance entre la mâchoire de serrage (10) et la face frontale (2) peut être réglée par l'intermédiaire d'un levier pivotant (14), le levier pivotant (14) étant pour cela articulé, à l'aide d'un levier à genouillère (15), au niveau du crochet de serrage (3).

11. Fermeture de cloison (1) selon la revendication 10, dans laquelle le levier à genouillère (15) présente une longueur réglable et est pour cela couplé, de préférence par l'intermédiaire d'une tige filetée (16), avec le levier pivotant (14).

12. Fermeture de cloison (1) selon la revendication 10 ou 11, dans laquelle le levier à genouillère (15) est couplé avec le levier pivotant (14), par l'intermédiaire d'une tige filetée (16), dans laquelle la tige filetée (16) s'appuie contre le levier pivotant (14) par l'intermédiaire d'un élément à ressort (18), de préférence par l'intermédiaire d'un ressort à spirale.

13. Fermeture de cloison (1) selon l'une des revendications 1 à 11, dans laquelle le levier à genouillère (15) présente une longueur fixe et relie de manière rigide le levier pivotant (14) avec le crochet de serrage (3).

14. Disposition pour la sécurisation d'une charge (103) sur une surface de chargement (101) d'un véhicule de transport (100), dans lequel la disposition comprend au moins une fermeture de cloison (1) selon l'une des revendications précédentes ainsi qu'une surface de chargement (101) d'un véhicule de transport (100), qui comprend deux parois latérales (102) opposées, qui sont reliées entre elles par l'intermédiaire de la fermeture de cloison (1), dans laquelle la fermeture de cloison (1) s'accroche, avec son au moins un crochet de serrage (3), à une des parois latérales (102) et la paroi latérale (102) est serrée entre elle et la face frontale (2) avec la force de serrage mécanique.
